# EUROPEAN PATENT APPLICATION

(11) **EP 3 176 235 A1**
(43) Date of publication of application: **07.06.2017**
(21) Application number: 15826327.7
(22) Date of filing: 17.07.2015
(51) Int. Cl.: C09D 163/00, B32B 5/28, B32B 27/38, C08J 7/04, C09D 5/00, C09D 7/12, C09J 7/02, C09J 201/00

(54) **PRIMER COMPOSITION AND COMPOSITE ARTICLE**

(30) Priority: 28.07.2014 JP 2014152617; 14.07.2015 JP 2015140572
(71) Applicant: Nitto Denko Corporation, Ibaraki-shi, Osaka 567-8680 (JP)
(72) Inventor: KOSO, Masatsugu, Ibaraki-shi Osaka 567-8680 (JP); FUJII, Takahiro, Ibaraki-shi Osaka 567-8680 (JP)
(74) Representative: Müller-Boré & Partner Patentanwälte PartG mbB
(86) International application number: PCT/JP2015/070476
(87) International publication number: WO 2016/017446

(57) **Abstract**

Provided is a primer composition that can cause a fiber-reinforced plastic (FRP) and an adhesive to sufficiently conform to each other to express a sufficient adhesive strength. The present invention also provides a composite article containing a fiber-reinforced plastic (FRP) subjected to a primer treatment with such primer composition. The primer composition of the present invention includes: an aromatic compound having a hydroxyl group; and an epoxy. The composite article of the present invention includes a fiber-reinforced plastic, and at least part of a surface of the fiber-reinforced plastic is subjected to a primer treatment with the primer composition of the present invention.

## Description

### Technical Field

The present invention relates to a primer composition. The present invention also relates to a composite article containing a fiber-reinforced plastic (FRP) subjected to a primer treatment with the primer composition.

### Background Art

In a transportation machine, such as a railway vehicle, an aircraft, a ship, or an automobile, a metal, such as iron or aluminum, has heretofore been generally used as a constituent material therefor. When the transportation machine is produced by using the metal, such as iron or aluminum, as a constituent material, the metal, such as iron or aluminum, needs to be sufficiently bonded to any other adherend. A rubber epoxy-based curable resin composition has heretofore been generally used as such adhesive (e.g., Patent Literature 1).

In recent years, a reduction in weight of such transportation machine has been required for an improvement in fuel efficiency or the like. A reduction in weight of a constituent material for the transportation machine provides an important key to reducing the weight of the machine.

A lightweight material that can replace the metal, such as iron or aluminum, is, for example, a fiber-reinforced plastic (FRTP). A lightweight material particularly preferred as a constituent material for the transportation machine is, for example, a fiber-reinforced thermoplastic (FRTP) using a thermoplastic resin as a matrix resin because of a requirement for the ease of molding or the like.

However, the fiber-reinforced plastic (FRP) hardly conforms to an adhesive. Accordingly, a technology involving arranging a primer layer containing an amine between the fiber-reinforced plastic (FRP) and the adhesive to improve an adhesive strength therebetween has been reported (e.g., Patent Literature 2). However, even when such conventional primer is used, there occurs a problem in that the fiber-reinforced plastic (FRP) and the adhesive still hardly conform to each other sufficiently, and hence at present, it has been impossible to express a sufficient adhesive strength.

### Citation List

### Patent Literature

[PTL 1] JP 3229467 B2
[PTL 2] JP 2003-71377 A

### Summary of Invention

### Technical Problem

The present invention has been made to solve the conventional problem, and an object of the present invention is to provide a primer composition that can cause a fiber-reinforced plastic (FRP) and an adhesive to sufficiently conform to each other to express a sufficient adhesive strength. Another object of the present invention is to provide a composite article containing a fiber-reinforced plastic (FRP) subjected to a primer treatment with such primer composition.

### Solution to Problem

A primer composition according to one embodiment of the present invention includes: an aromatic compound having a hydroxyl group; and an epoxy.

In a preferred embodiment, a content ratio "aromatic compound having a hydroxyl group/epoxy" of the aromatic compound having a hydroxyl group to the epoxy is from 30/70 to 99/1 in terms of a weight ratio.

In a preferred embodiment, the primer composition of the present invention further includes a solvent.

In a preferred embodiment, the primer composition of the present invention is used for a primer treatment of a surface of a fiber-reinforced plastic.

A composite article of the present invention includes a fiber-reinforced plastic, and at least part of a surface of the fiber-reinforced plastic is subjected to a primer treatment with the primer composition of the present invention.

In a preferred embodiment, the fiber-reinforced plastic has a sheet shape and the surface subjected to the primer treatment includes one surface side of the sheet.

In a preferred embodiment, the surface subjected to the primer treatment has placed thereon at least one kind selected from an adhesive resin composition, an adhesive tape formed by curing the adhesive resin composition, and an adhesive tape with a base material having a base material layer and a layer formed by curing the adhesive resin composition.

### Advantageous Effects of Invention

According to the present invention, there can be provided the primer composition that can cause a fiber-reinforced plastic (FRP) and an adhesive to sufficiently conform to each other to express a sufficient adhesive strength. In addition, according to the present invention, there can be provided the composite article containing a fiber-reinforced plastic (FRP) subjected to a primer treatment with such primer composition.

### Description of Embodiments

### <<Primer Composition>>

A primer composition of the present invention contains an aromatic compound having a hydroxyl group and an epoxy. The primer composition of the present invention contains the aromatic compound having a hydroxyl group and the epoxy, and hence can cause a fiber-reinforced plastic (FRP) and an adhesive to sufficiently conform to each other to express a sufficient adhesive strength.

Any appropriate compound may be adopted as the aromatic compound having a hydroxyl group in the primer composition of the present invention as long as the compound is an aromatic compound having a hydroxyl group. Examples of such aromatic compound having a hydroxyl group include resorcin (1,3-dihydroxybenzene), phenol, catechol, hydroquinone, cresol, di-t-butylhydroxytoluene, benzyl alcohol, 1,3-hydroxymethylbenzene, 2,3-dihydroxynaphthalene, and 2, 7-dihydroxynaphthalene. Of such aromatic compounds each having a hydroxyl group, resorcin (1, 3-dihydroxybenzene) is preferred from the viewpoint that the effects of the present invention can be sufficiently expressed.

The number of kinds of the aromatic compounds each having a hydroxyl group in the primer composition of the present invention may be only one, or may be two or more.

Any appropriate compound or resin may be adopted as the epoxy in the primer composition of the present invention as long as the compound or the resin has an epoxy group. Examples of such epoxy include a polyamide-modified epoxy resin, a monoepoxy compound, a polyepoxy compound, a bisphenol A-type epoxy resin, a heat-resistant epoxy resin, an alicyclic epoxy resin, a dimer acid-modified epoxy resin, a CTBN-modified epoxy resin, a phenol novolac-type epoxy resin, a p-aminophenol-type epoxy resin, and an aliphatic epoxy resin.

Examples of the monoepoxy compound include butyl glycidyl ether, hexyl glycidyl ether, phenyl glycidyl ether, allyl glycidyl ether, p-tert-butylphenyl glycidyl ether, ethylene oxide, propylene oxide, p-xylyl glycidyl ether, glycidyl acetate, glycidyl butyrate, glycidyl hexoate, and glycidyl benzoate.

Examples of the polyepoxy compound include: a bisphenol-type epoxy resin in which a bisphenol, such as bisphenol A, bisphenol F, bisphenol AD, bisphenol S, tetramethylbisphenol A, tetramethylbisphenol F, tetramethylbisphenol AD, tetramethylbisphenol S, tetrabromobisphenol A, tetrachlorobisphenol A, or tetrafluorobisphenol A, is glycidylated; an epoxy resin in which any other dihydric phenol, such as a biphenol, dihydroxynaphthalene, or 9,9-bis(4-hydroxyphenyl)fluorene, is glycidylated; an epoxy resin in which a trisphenol, such as 1,1,1-tris(4-hydroxyphenyl)methane or 4,4-(1-(4-(1-(4-hydroxyphenyl)-1-methylethyl)phenyl)ethylidene )bisphenol, is glycidylated; an epoxy resin in which a tetrakis phenol, such as 1,1,2,2-tetrakis(4-hydroxyphenyl)ethane, is glycidylated; a novolac-type epoxy resin in which a novolac, such as a phenol novolac, a cresol novolac, a bisphenol A novolac, a brominated phenol novolac, or a brominated bisphenol A novolac, is glycidylated; an epoxy resin in which a polyphenol is glycidylated; an aliphatic ether-type epoxy resin in which a polyhydric alcohol, such as glycerin or polyethylene glycol, is glycidylated; an ether ester-type epoxy resin in which a hydroxycarboxylic acid, such as p-oxybenzoic acid or β-oxynaphthoic acid, is glycidylated; an ester-type epoxy resin in which a polycarboxylic acid, such as phthalic acid or terephthalic acid, is glycidylated; a glycidylamine-type epoxy resin, including a glycidylated product of an amine compound, such as 4,4-diaminodiphenylmethane or m-aminophenol, and triglycidyl isocyanurate; a dicyclopentadiene-type epoxy resin; a naphthalene-type epoxy resin; a diphenyl sulfone-type epoxy resin; an alicyclic epoxide, such as 3,4-epoxycyclohexylmethyl-3',4'-epoxycyclohexane carboxylate; and a diaminodiphenylmethane-type epoxy resin.

An example of the bisphenol A-type epoxy resin is a bisphenol A-type epoxy resin in which a bisphenol A, such as bisphenol A, tetramethylbisphenol A, tetrabromobisphenol A, or tetrachlorobisphenol A, is glycidylated.

Examples of the heat-resistant epoxy resin include a high Tg skeleton-type epoxy resin and a polyfunctional type epoxy resin.

Examples of the high Tg skeleton-type epoxy resin include: a dicyclopentadiene-type epoxy resin; a naphthalene-type epoxy resin; a diphenyl sulfone-type epoxy resin; and an alicyclic epoxide, such as 3,4-epoxycyclohexylmethyl-3',4'-epoxycyclohexane carboxylate.

Examples of the polyfunctional type epoxy resin include: a novolac-type epoxy resin in which a novolac, such as a phenol novolac, a cresol novolac, a bisphenol A novolac, a brominated phenol novolac, or a brominated bisphenol A novolac, is glycidylated; an epoxy resin in which a polyphenol is glycidylated; an aliphatic ether-type epoxy resin in which a polyhydric alcohol, such as glycerin or polyethylene glycol, is glycidylated; a glycidylamine-type epoxy resin, including a glycidylated product of an amine compound, such as 4,4-diaminodiphenylmethane or m-aminophenol, and triglycidyl isocyanurate; and a diaminodiphenylmethane-type epoxy resin.

Of such epoxies, a polyamide-modified epoxy resin, a bisphenol A-type epoxy resin, a dimer acid-modified epoxy resin, a CTBN-modified epoxy resin, a phenol novolac-type epoxy resin, and a diaminodiphenylmethane-type epoxy resin are preferred, and a polyamide-modified epoxy resin is more preferred from the viewpoint that the effects of the present invention can be sufficiently expressed.

The number of kinds of the epoxies in the primer composition of the present invention may be only one, or may be two or more.

In the primer composition of the present invention, the content ratio "aromatic compound having a hydroxyl group/epoxy" of the aromatic compound having a hydroxyl group to the epoxy is preferably from 30/70 to 99/1 in terms of a weight ratio. The content ratio "aromatic compound having a hydroxyl group/epoxy" is more preferably from 40/60 to 98/2. The content ratio "aromatic compound having a hydroxyl group/epoxy" is still more preferably from 50/50 to 97/3. The content ratio "aromatic compound having a hydroxyl group/epoxy" is yet still more preferably from 60/40 to 96/4. The content ratio "aromatic compound having a hydroxyl group/epoxy" is even yet still more preferably from 70/30 to 95/5. The content ratio "aromatic compound having a hydroxyl group/epoxy" is particularly preferably from 80/20 to 94/6. The content ratio "aromatic compound having a hydroxyl group/epoxy" is most preferably from 85/15 to 93/7. The adjustment of the content ratio of the aromatic compound having a hydroxyl group to the epoxy within the range can provide a primer composition that can cause a fiber-reinforced plastic (FRP) and an adhesive to more sufficiently conform to each other to express a more sufficient adhesive strength.

The primer composition of the present invention may contain a solvent. Any appropriate solvent may be adopted as such solvent to the extent that the effects of the present invention are not impaired. Examples of such solvent include: alcohols, such as methanol, ethanol, and isopropyl alcohol; ketones, such as methyl ethyl ketone; esters; aliphatic, alicyclic, and aromatic hydrocarbons; halogenated hydrocarbons; amides, such as dimethylformamide; sulfoxides, such as dimethyl sulfoxide; and ethers, such as dimethyl ether and tetrahydrofuran.

A solid content concentration in the primer composition of the present invention may be appropriately set in accordance with purposes. From the viewpoint of, for example, the simplicity of a primer treatment, such solid content concentration is preferably 10 wt% or more, more preferably 13 wt% or more, still more preferably 15 wt% or more particularly preferably 18 wt% or more, most preferably 20 wt% or more in terms of a weight ratio. An upper limit value for such solid content concentration is preferably 50 wt% or less from the viewpoint of the handleability of the composition.

The primer composition of the present invention may contain any appropriate other component to the extent that the effects of the present invention are not impaired.

The primer composition of the present invention is applicable to any appropriate application as long as the application is an application where the composition can be used as a primer. The primer composition of the present invention is preferably used for the primer treatment of the surface of a fiber-reinforced plastic (FRP) . This is because the primer composition of the present invention has such construction as described above, and hence can cause the fiber-reinforced plastic (FRP) and an adhesive to sufficiently conform to each other to express a sufficient adhesive strength.

Any appropriate fiber-reinforced plastic (FRP) may be adopted as the fiber-reinforced plastic (FRP) that may be subjected to a primer treatment with the primer composition of the present invention. Examples of such fiber-reinforced plastic (FRP) include a fiber-reinforced thermoplastic (FRTP) and a fiber-reinforced thermosetting plastic.

The fiber-reinforced plastic (FRP) that may be subjected to a primer treatment with the primer composition of the present invention is preferably the fiber-reinforced thermoplastic (FRTP) because the effects of the present invention can be expressed to a larger extent.

Examples of the fiber-reinforced thermoplastic (FRTP) include a carbon fiber-reinforced thermoplastic (CFRTP) and a glass fiber-reinforced thermoplastic (GFRTP). Of those, a carbon fiber-reinforced thermoplastic (CFRTP) is preferred because the effects of the present invention can be expressed to a larger extent.

Any appropriate carbon fiber-reinforced thermoplastic (CFRTP) may be adopted as the carbon fiber-reinforced thermoplastic (CFRTP). Examples of such carbon fiber-reinforced thermoplastic (CFRTP) include a PA66-based carbon fiber-reinforced thermoplastic, a PPS-based carbon fiber-reinforced thermoplastic, a TPU-based carbon fiber-reinforced thermoplastic, and a PP-based carbon fiber-reinforced thermoplastic.

Any appropriate glass fiber-reinforced thermoplastic (GFRTP) may be adopted as the glass fiber-reinforced thermoplastic (GFRTP) . An example of such glass fiber-reinforced thermoplastic (GFRTP) is a PP-based glass fiber-reinforced thermoplastic.

### <<Composite Article>>

A composite article of the present invention is a composite article containing a fiber-reinforced plastic (FRP), in which at least part of the surface of the fiber-reinforced plastic (FRP) is subjected to a primer treatment with the primer composition of the present invention. The composite article of the present invention contains the fiber-reinforced plastic (FRP) whose surface is at least partially subjected to the primer treatment with the primer composition of the present invention, and hence can cause the fiber-reinforced plastic (FRP) and an adhesive to sufficiently conform to each other to express a sufficient adhesive strength.

The description of the foregoing fiber-reinforced plastic (FRP) is cited as the description of the fiber-reinforced plastic (FRP) in the composite article of the present invention.

In the composite article of the present invention, at least part of the surface of the fiber-reinforcedplastic (FRP) is subjected to the primer treatment with the primer composition of the present invention. That is, the entirety of the surface of the fiber-reinforced plastic (FRP) may be subjected to the primer treatment with the primer composition of the present invention, or only part of the surface of the fiber-reinforced plastic (FRP) may be subjected to the primer treatment with the primer composition of the present invention.

Any appropriate method may be adopted as a method for the primer treatment as long as the effects of the present invention can be sufficiently expressed by the method. Such method is, for example, a method involving applying a primer to the surface of the fiber-reinforced plastic (FRP) by brushing, wiping, dipping, spraying, or the like, and drying the primer as required to perform the primer treatment.

In the composite article of the present invention, the fiber-reinforced plastic (FRP) preferably has a sheet shape because the effects of the present invention can be expressed to a larger extent. Any appropriate thickness may be adopted as a thickness in the case where the fiber-reinforced plastic (FRP) has a sheet shape in accordance with purposes.

In the composite article of the present invention, when the fiber-reinforced plastic (FRP) has a sheet shape, one surface side of the sheet is preferably subjected to the primer treatment with the primer composition of the present invention because the effects of the present invention can be expressed to a larger extent.

In the composite article of the present invention, when the fiber-reinforced plastic (FRP) has a sheet shape and the surface subjected to the primer treatment is one surface side of the sheet, an adhesive material is preferably placed on the surface subjected to the primer treatment. That is, one preferred embodiment of the composite article of the present invention is an embodiment in which the adhesive material is arranged on the surface of the fiber-reinforced plastic (FRP) subjected to the primer treatment. A method of arranging the adhesive material on the surface of the fiber-reinforced plastic (FRP) subjected to the primer treatment is, for example, bonding or lamination. In such composite article of the present invention, one surface side of the sheet-shaped fiber-reinforced plastic (FRP) is subjected to the primer treatment with the primer composition of the present invention, and hence the plastic can sufficiently conform to the adhesive material to express a sufficient adhesive strength.

The adhesive material is preferably at least one kind selected from an adhesive resin composition, an adhesive tape formed by curing the adhesive resin composition, and an adhesive tape with a base material having a base material layer and a layer formed by curing the adhesive resin composition.

### <Adhesive Resin Composition>

The adhesive resin composition preferably contains an epoxy-based resin, and more preferably contains a polyamide-based resin and the epoxy-based resin.

Any appropriate epoxy-based resin may be selected as the epoxy-based resin that may be incorporated into the adhesive resin composition to the extent that the effects of the present invention are not impaired. Examples of such epoxy-based resin include a monoepoxy compound and a polyepoxy compound. Only one kind of the epoxy-based resins to be incorporated into the adhesive resin composition may be used, or two or more kinds thereof may be used in combination.

Examples of the monoepoxy compound include butyl glycidyl ether, hexyl glycidyl ether, phenyl glycidyl ether, allyl glycidyl ether, p-tert-butylphenyl glycidylether, ethylene oxide, propylene oxide, p-xylyl glycidyl ether, glycidyl acetate, glycidyl butyrate, glycidyl hexoate, and glycidyl benzoate.

Examples of the polyepoxy compound include: a bisphenol-type epoxy resin in which a bisphenol, such as bisphenol A, bisphenol F, bisphenol AD, bisphenol S, tetramethylbisphenol A, tetramethylbisphenol F, tetramethylbisphenol AD, tetramethylbisphenol S, tetrabromobisphenol A, tetrachlorobisphenol A, or tetrafluorobisphenol A, is glycidylated; an epoxy resin in which any other dihydric phenol, such as a biphenol, dihydroxynaphthalene, or 9,9-bis(4-hydroxyphenyl)fluorene, is glycidylated; an epoxy resin in which a trisphenol, such as 1,1,1-tris(4-hydroxyphenyl)methane, or 4,4-(1-(4-(1-(4-hydroxyphenyl)-1-methylethyl)phenyl)ethylidene )bisphenol, is glycidylated; an epoxy resin in which a tetrakis phenol, such as 1,1,2,2-tetrakis(4-hydroxyphenyl)ethane, is glycidylated; a novolac-type epoxy resin in which a novolac, such as a phenol novolac, a cresol novolac, a bisphenol A novolac, a brominated phenol novolac, or a brominated bisphenol A novolac, is glycidylated; an epoxy resin in which a polyphenol is glycidylated; an aliphatic ether-type epoxy resin in which a polyhydric alcohol, such as glycerin or polyethylene glycol, is glycidylated; an ether ester-type epoxy resin in which a hydroxycarboxylic acid, such as p-oxybenzoic acid or β-oxynaphthoic acid, is glycidylated; an ester-type epoxy resin in which a polycarboxylic acid, such as phthalic acid or terephthalic acid, is glycidylated; a glycidylamine-type epoxy resin, including a glycidylated product of an amine compound, such as 4,4-diaminodiphenylmethane or m-aminophenol, and triglycidyl isocyanurate; a dicyclopentadiene-type epoxy resin; a naphthalene-type epoxy resin; a diphenyl sulfone-type epoxy resin; an alicyclic epoxide, such as 3,4-epoxycyclohexylmethyl-3',4'-epoxycyclohexane carboxylate; and a diaminodiphenylmethane-type epoxy resin.

The epoxy-based resin in the adhesive resin composition preferably contains at least one kind selected from a bisphenol A-type epoxy resin and a heat-resistant epoxy resin because the effects of the present invention can be sufficiently expressed. The content of at least one kind selected from the bisphenol A-type epoxy resin and the heat-resistant epoxy resin in the epoxy-based resin is preferably from 50 wt% to 100 wt%, more preferably from 70 wt% to 100 wt%, still more preferably from 90 wt% to 100 wt%, particularly preferably from 95 wt% to 100 wt%, most preferably 100 wt%. When the content of at least one kind selected from the bisphenol A-type epoxy resin and the heat-resistant epoxy resin in the epoxy-based resin falls within the range, in the composite article of the present invention, the surface side of the fiber-reinforced plastic (FRP) subjected to the primer treatment can sufficiently conform to the adhesive resin composition to express a sufficient adhesive strength.

An example of the bisphenol A-type epoxy resin is a bisphenol A-type epoxy resin in which a bisphenol A, such as bisphenol A, tetramethylbisphenol A, tetrabromobisphenol A, or tetrachlorobisphenol A, is glycidylated.

Examples of the heat-resistant epoxy resin include a high Tg skeleton-type epoxy resin and a polyfunctional type epoxy resin.

Examples of the high Tg skeleton-type epoxy resin include: a dicyclopentadiene-type epoxy resin; a naphthalene-type epoxy resin; a diphenyl sulfone-type epoxy resin; and an alicyclic epoxide, such as 3,4-epoxycyclohexylmethyl-3',4'-epoxycyclohexane carboxylate.

Examples of the polyfunctional type epoxy resin include: a novolac-type epoxy resin in which a novolac, such as a phenol novolac, a cresol novolac, a bisphenol A novolac, a brominated phenol novolac, or a brominated bisphenol A novolac, is glycidylated; an epoxy resin in which a polyphenol is glycidylated; an aliphatic ether-type epoxy resin in which a polyhydric alcohol, such as glycerin or polyethylene glycol, is glycidylated; a glycidylamine-type epoxy resin, including a glycidylated product of an amine compound, such as 4,4-diaminodiphenylmethane or m-aminophenol, and triglycidyl isocyanurate; and a diphenyldiaminomethane-type epoxy resin.

Any appropriate polyamide-based resin may be selected as the polyamide-based resin that may be incorporated into the adhesive resin composition to the extent that the effects of the present invention are not impaired. Examples of such polyamide-based resin include an aliphatic polyamide-based resin, an alicyclic polyamide-based resin, an aromatic polyamide-based resin, and a fatty acid-modified polyamide-based resin. Only one kind of those resins may be used as the polyamide-based resin in the adhesive resin composition, or two or more kinds thereof may be used in combination.

The polyamide-based resin in the adhesive resin composition preferably contains a fatty acid-modified polyamide-based resin because the effects of the present invention can be sufficiently expressed. When the polyamide-based resin in the adhesive resin composition contains the fatty acid-modified polyamide-based resin, in the composite article of the present invention, the surface side of the fiber-reinforced plastic (FRP) subjected to the primer treatment can sufficiently conform to the adhesive resin composition to express a sufficient adhesive strength.

The content of the fatty acid-modified polyamide-based resin in the polyamide-based resin is preferably from 50 wt% to 100 wt%, more preferably from 70 wt% to 100 wt%, still more preferably from 90 wt% to 100 wt%, particularly preferably from 95 wt% to 100 wt%, most preferably 100 wt%. When the content of the fatty acid-modified polyamide-based resin in the polyamide-based resin falls within the range, in the composite article of the present invention, the surface side of the fiber-reinforced plastic (FRP) subjected to the primer treatment can sufficiently conform to the adhesive resin composition to express a sufficient adhesive strength.

The term "fatty acid-modified polyamide-based resin" means a polymerized fatty acid-based polyamide resin and/or a polymerized fatty acid-based polyamide block copolymer resin.

The polymerized fatty acid-based polyamide resin and/or the polymerized fatty acid-based polyamide block copolymer resin each contain a polymerized fatty acid as a monomer unit. Here, the polymerized fatty acid is a dimer acid obtained by using oleic acid as a starting raw material, and is industrially a dibasic acid (number of carbon atoms (C): 36) having the highest molecular weight. A polyamide resin obtained by using, as a dicarboxylic acid component, a polymerized fatty acid containing the dimer acid as amain component, and 13% to 17% of a monomer acid and a trimer acid as by-products is the polymerized fatty acid-based polyamide resin. The polymerized fatty acid-based polyamide block copolymer resin has a block except a polymerized fatty acid-based polyamide block, and contains a polyether ester amide resin or a polyester amide resin.

A terminal of the fatty acid-modified polyamide-based resin may be modified with a functional group, such as an amino group, a carboxyl group, or a hydroxyl group. When the terminal has such functional group, in the composite article of the present invention, the surface side of the fiber-reinforced plastic (FRP) subjected to the primer treatment can sufficiently conform to the adhesive resin composition to express a sufficient adhesive strength. The fatty acid-modified polyamide-based resin having such functional group is sometimes referred to as "functional group-containing fatty acid-modified polyamide-based resin."

The fatty acid-modified polyamide-based resin is available as a commercial product. The resin is available from, for example, T&K TOKA Co., Ltd. (formerly Fujikasei Kogyo Co., Ltd.), and examples thereof include PA-100 (manufactured by T&K TOKA Co., Ltd.), PA-200 (manufactured by T&K TOKA Co., Ltd.), and PA-201 (manufactured by T&K TOKA Co., Ltd.). In addition, the functional group-containing fatty acid-modified polyamide-based resin is, for example, TXM-272 (fatty acid-modified polyamide-based resin having both a carboxyl group and an amino group, manufactured by T&K TOKA Co., Ltd.).

The melting point of the fatty acid-modified polyamide-based resin is preferably 180°C or less, more preferably from 80°C to 180°C, still more preferably from 80°C to 160°C, particularly preferably from 80°C to 130°C. When the melting point of the fatty acid-modified polyamide-based resin falls within the range, in the composite article of the present invention, the surface side of the fiber-reinforced plastic (FRP) subjected to the primer treatment can sufficiently conform to the adhesive resin composition to express a sufficient adhesive strength.

In the case where the adhesive resin composition contains the polyamide-based resin and the epoxy-based resin, the content of the polyamide-based resin is preferably 15 parts by weight or more and less than 100 parts by weight, more preferably 15 parts by weight or more and less than 80 parts by weight, still more preferably 20 parts by weight or more and less than 70 parts by weight, particularly preferably 25 parts by weight or more and less than 50 parts by weight with respect to 100 parts by weight of the epoxy-based resin. In the case where the adhesive resin composition contains the polyamide-based resin and the epoxy-based resin, when the content of the polyamide-based resin in the adhesive resin composition falls within the range, in the composite article of the present invention, the surface side of the fiber-reinforced plastic (FRP) subjected to the primer treatment can sufficiently conform to the adhesive resin composition to express a sufficient adhesive strength.

When the adhesive resin composition contains the polyamide-based resin and the epoxy-based resin, the total content of the polyamide-based resin and the epoxy-based resin is preferably from 50 wt% to 99 wt%, more preferably from 55 wt% to 99 wt%, still more preferably from 65 wt% to 97 wt%, particularly preferably from 70 wt% to 97 wt%. When the total content of the polyamide-based resin and the epoxy-based resin in the adhesive resin composition falls within the range, in the composite article of the present invention, the surface side of the fiber-reinforced plastic (FRP) subjected to the primer treatment can sufficiently conform to the adhesive resin composition to express a sufficient adhesive strength.

In addition to the polyamide-based resin and the epoxy-based resin, any appropriate other additive may be incorporated into the adhesive resin composition to the extent that the effects of the present invention are not impaired. Examples of such additive include a curing agent, a thixotropic agent, a filler, a pigment, a tackifier (e.g., a rosin-based resin, a terpene-based resin, a coumarone-indene-based resin, or a petroleum-based resin), a lubricant (e.g., stearic acid), a stabilizer, an antiaging agent, an antioxidant, a UV absorber, a colorant, a flame retardant, an antistatic agent, an electroconductivity-imparting agent, a sliding property-imparting agent, a surfactant, and a silane coupling agent.

When the composite article of the present invention has the adhesive resin composition, the shearing adhesive strength of the adhesive resin composition side thereof to a fiber-reinforced thermoplastic (FRTP) at room temperature (25°C) is preferably from 2.0 MPa to 100 MPa, more preferably from 2.5 MPa to 70.0 MPa, still more preferably from 3.0 MPa to 50.0 MPa, particularly preferably from 3. 5 MPa to 30.0 MPa. When the shearing adhesive strength falls within the range, the composite article of the present invention can express a sufficient adhesive strength.

When the composite article of the present invention has the adhesive resin composition, the shearing adhesive strength of the adhesive resin composition side thereof to a carbon fiber-reinforced thermoplastic (CFRTP) at room temperature (25°C) is preferably from 8.0 MPa to 100 MPa, more preferably from 8.5 MPa to 70.0 MPa, still more preferably from 9.0 MPa to 50.0 MPa, yet still more preferably from 9.5 MPa to 40.0 MPa, even yet still more preferably from 10.0 MPa to 30.0 MPa, even yet still more preferably from 15.0 MPa to 30.0 MPa, even yet still more preferably from 20.0 MPa to 30.0 MPa, particularly preferably from 22.0 MPa to 30.0 MPa, most preferably from 23.0 MPa to 30.0 MPa. When the shearing adhesive strength falls within the range, the composite article of the present invention can express a sufficient adhesive strength.

When the composite article of the present invention has the adhesive resin composition, the shearing adhesive strength of the adhesive resin composition side thereof to a glass fiber-reinforced thermoplastic (GFRTP) at room temperature (25°C) is preferably from 3.0 MPa to 100 MPa, more preferably from 3.3 MPa to 70.0 MPa, still more preferably from 3.5 MPa to 50.0 MPa, particularly preferably from 3. 7 MPa to 30. 0 MPa. When the shearing adhesive strength falls within the range, the composite article of the present invention can express a sufficient adhesive strength.

### <Adhesive Tape>

The adhesive tape is formed by curing the adhesive resin composition. Any appropriate method may be adopted as a method for the curing to the extent that the effects of the present invention are not impaired.

The adhesive tape can be obtained as a sheet-shaped adhesive tape by, for example, applying the adhesive resin composition onto any appropriate separator and curing the composition. The separator may be peeled at the time of the use of the tape.

Any appropriate thickness may be adopted as the thickness of the adhesive tape in accordance with purposes. Such thickness is, for example, preferably from 5 µm to 5,000 µm, more preferably from 50 µm to 2,000 µm, still more preferably from 100 µm to 1,000 µm, particularly preferably from 200 µm to 1,000 µm.

### <Adhesive Tape with Base Material>

The adhesive tape with a base material has a base material layer and a layer formed by curing the adhesive resin composition.

Any appropriate base material layer may be adopted as the base material layer to the extent that the effects of the present invention are not impaired. Examples of such base material layer include a nonwoven fabric, a glass cloth, a synthetic resin nonwoven fabric, a plastic, and a carbon cloth. The introduction of the base material layer is useful in terms of, for example, an improvement in handleability of the tape and the securement of the thickness of an adhesion layer after the curing.

Any appropriate thickness may be adopted as the thickness of the base material layer in accordance with purposes. Such thickness is, for example, preferably from 10 µm to 2,000 µm, more preferably from 50 µm to 1,000 µm, still more preferably from 100 µm to 500 µm, particularly preferably from 200 µm to 400 µm.

Any appropriate method may be adopted as a method for the curing of the adhesive resin composition to the extent that the effects of the present invention are not impaired.

The layer formed by curing the adhesive resin composition can be obtained as a layer by, for example, applying the adhesive resin composition onto any appropriate separator and curing the composition. After that, the adhesive tape with a base material can be obtained by attaching, to the base material layer, the side of the layer formed by curing the adhesive resin composition on which the separator is not present. The separator may be peeled at the time of the use of the tape.

The adhesive tape with a base material can also be obtained by applying the adhesive resin composition onto the base material layer and curing the composition.

Any appropriate thickness may be adopted as the thickness of the adhesive tape with a base material in accordance with purposes. Such thickness is, for example, preferably from 10 µm to 5,000 µm, more preferably from 50 µm to 2,000 µm, still more preferably from 100 µm to 1,000 µm, particularly preferably from 200 µm to 1,000 µm.

### Examples

### <Measurement of Shearing Adhesive Strength>

Two FRTP plate materials each measuring 25 mm wide by 100 mm long (TEPEX dynalite 201-C200 (PA66-based carbon fibers, thickness: 2 mm)), the plate materials having been subj ected to surface polishing with a desktop belt sander having mounted thereon an endless belt #60 and then been cleaned with isopropyl alcohol, were prepared.

Various primers obtained in Examples and Comparative Examples were each impregnated into a waste cloth made of paper and applied to each of the FRTP plate materials, and the resultant was left to stand under an atmosphere at 25°C for 30 minutes.

Next, a separately prepared adhesive tape was cut so as to measure 25 mm wide by 12.5 mm long.

The two FRTP plate materials were attached to each other with the adhesive tape under an atmosphere at 20°C by applying a load of 2 kg for 5 seconds so that the plate materials overlapped each other in a portion measuring 25 mm wide by 12.5 mm long from an end portion of each of the plate materials, followed by fixation with a paper clip. After that, the adhesive tape was cured by heating the resultant at 150°C for 20 minutes. Thus, a test piece (composite material) was produced.

The test piece (composite material) was cooled to room temperature (25°C). After that, the test piece was chucked at portions distant by 40 mm each from both of its end portions, and a tensile test was performed at a test speed of 5 mm/min to measure its maximum shearing adhesive strength.

### <Preparation of Adhesive Tape>

55 Parts by weight of a bisphenol A-type epoxy resin (grade: 834, manufactured by Mitsubishi Chemical Corporation), 20 parts by weight of a diphenyldiaminomethane-type epoxy resin (grade: JER604, manufactured by Mitsubishi Chemical Corporation), 25 parts by weight of a polyamide resin (grade: TXM-272, fatty acid-modified polyamide-based resin having both a carboxyl group and an amino group, melting point: 111°C, manufactured by T&K TOKA Corporation), 2 parts by weight of a curing agent (DCMU-99, manufactured by Hodogaya Chemical Co., Ltd.), and 5 parts by weight of a curing agent (DDA50, manufactured by CVC Thermoset Specialties) were blended, and the blend was kneaded with a mixing roll to prepare a resin composition as a kneaded product.

Next, the resultant resin composition was rolled with a press molding machine to have a thickness of 0.5 mm in a state of being sandwiched between release paper and a nonwoven fabric. Thus, an adhesive tape with a base material was obtained.

### [Example 1]

23.5 Parts by weight of resorcin (manufactured by Sumitomo Chemical Co., Ltd.), 5.9 parts by weight of a polyamide-modified epoxy resin (trade name: "TXM74B3", manufactured by T&K TOKA Co., Ltd.), 35. 3 parts by weight of methanol (manufactured by Wako Pure Chemical Industries, Ltd.), 17.6 parts by weight of ethanol (manufactured by Wako Pure Chemical Industries, Ltd.), and 17.6 parts by weight of isopropyl alcohol (manufactured by Wako Pure Chemical Industries, Ltd.) were blended to provide a primer composition (1).

The results are shown in Table 1.

### [Example 2]

23.5 Parts by weight of resorcin (manufactured by Sumitomo Chemical Co., Ltd.), 5. 9 parts by weight of a bisphenol A-type epoxy resin (trade name: "834", manufactured by Mitsubishi Chemical Corporation), 35.3 parts by weight of methanol (manufactured by Wako Pure Chemical Industries, Ltd.), 17.6 parts by weight of ethanol (manufactured by Wako Pure Chemical Industries, Ltd.), and 17.6 parts by weight of isopropyl alcohol (manufactured by Wako Pure Chemical Industries, Ltd.) were blended to provide a primer composition (2).

The results are shown in Table 1.

### [Example 3]

23.5 Parts by weight of resorcin (manufactured by Sumitomo Chemical Co., Ltd.), 5.9 parts by weight of a dimer acid-modified epoxy resin (trade name: "YD172", manufactured by Nippon Steel & Sumikin Chemical Co., Ltd.), 35.3 parts by weight of methanol (manufactured by Wako Pure Chemical Industries, Ltd.), 17.6 parts by weight of ethanol (manufactured by Wako Pure Chemical Industries, Ltd.), and 17.6 parts by weight of isopropyl alcohol (manufactured by Wako Pure Chemical Industries, Ltd.) were blended to provide a primer composition (3).

The results are shown in Table 1.

### [Example 4]

23.5 Parts by weight of resorcin (manufactured by Sumitomo Chemical Co., Ltd.), 5.9 parts by weight of a CTBN-modified epoxy resin (trade name: "EPR-2000", manufactured by ADEKA Corporation), 35. 3 parts by weight of methanol (manufactured by Wako Pure Chemical Industries, Ltd.), 17.6 parts by weight of ethanol (manufactured by Wako Pure Chemical Industries, Ltd.), and 17.6 parts by weight of isopropyl alcohol (manufactured by Wako Pure Chemical Industries, Ltd.) were blended to provide a primer composition (4).

The results are shown in Table 1.

### [Example 5]

23.5 Parts by weight of resorcin (manufactured by Sumitomo Chemical Co., Ltd.), 5.9 parts by weight of a phenol novolac-type epoxy resin (trade name: "EPALLOY 8250", manufactured by CVC Thermoset Specialties), 35.3 parts by weight of methanol (manufactured by Wako Pure Chemical Industries, Ltd.), 17.6 parts by weight of ethanol (manufactured by Wako Pure Chemical Industries, Ltd.), and 17. 6 parts by weight of isopropyl alcohol (manufactured by Wako Pure Chemical Industries, Ltd.) were blended to provide a primer composition (5).

The results are shown in Table 1.

### [Example 6]

23.5 Parts by weight of resorcin (manufactured by Sumitomo Chemical Co., Ltd.), 5.9 parts by weight of a diphenyldiaminomethane-type epoxy resin (trade name: "JER604", manufactured by Mitsubishi Chemical Corporation), 35.3 parts by weight of methanol (manufactured by Wako Pure Chemical Industries, Ltd.), 17.6 parts by weight of ethanol (manufactured by Wako Pure Chemical Industries, Ltd.), and 17.6 parts by weight of isopropyl alcohol (manufactured by Wako Pure Chemical Industries, Ltd.) were blended to provide a primer composition (6).

The results are shown in Table 1.

### [Example 7]

17.6 Parts by weight of resorcin (manufactured by Sumitomo Chemical Co., Ltd.), 11.8 parts by weight of a polyamide-modified epoxy resin (trade name: "TXM74B3", manufactured by T&K TOKA Co., Ltd.), 35. 3 parts by weight of methanol (manufactured by Wako Pure Chemical Industries, Ltd.), 17.6 parts by weight of ethanol (manufactured by Wako Pure Chemical Industries, Ltd.), and 17.6 parts by weight of isopropyl alcohol (manufactured by Wako Pure Chemical Industries, Ltd.) were blended to provide a primer composition (7).

The results are shown in Table 1.

### [Example 8]

26.5 Parts by weight of resorcin (manufactured by Sumitomo Chemical Co., Ltd.), 2.9 parts by weight of a polyamide-modified epoxy resin (trade name: "TXM7 4B3", manufactured by T&K TOKA Co., Ltd.), 35. 3 parts by weight of methanol (manufactured by Wako Pure Chemical Industries, Ltd.), 17.6 parts by weight of ethanol (manufactured by Wako Pure Chemical Industries, Ltd.), and 17.6 parts by weight of isopropyl alcohol (manufactured by Wako Pure Chemical Industries, Ltd.) were blended to provide a primer composition (8).

The results are shown in Table 1.

### [Example 9]

23.5 Parts by weight of resorcin (manufactured by Sumitomo Chemical Co., Ltd.), 5.9 parts by weight of a polyamide-modified epoxy resin (trade name: "TXM74B3", manufactured by T&K TOKA Co., Ltd.), and 70. 6 parts by weight of methyl ethyl ketone (manufactured by Wako Pure Chemical Industries, Ltd.) were blended to provide a primer composition (9).

The results are shown in Table 1.

### [Example 10]

23.5 Parts by weight of 2,4-dihydroxybenzophenone (manufactured by Tokyo Chemical Industry Co., Ltd.), 5.9 parts by weight of a polyamide-modified epoxy resin (trade name: "TXM74B3", manufactured by T&K TOKA Co., Ltd.), 35. 3 parts by weight of methanol (manufactured by Wako Pure Chemical Industries, Ltd.), 17.6 parts by weight of ethanol (manufactured by Wako Pure Chemical Industries, Ltd.), and 17.6 parts by weight of isopropyl alcohol (manufactured by Wako Pure Chemical Industries, Ltd.) were blended to provide a primer composition (10).

The results are shown in Table 1.

### [Example 11]

23.5 Parts by weight of catechol (manufactured by Tokyo Chemical Industry Co., Ltd.), 5.9 parts by weight of a polyamide-modified epoxy resin (trade name: "TXM74B3", manufactured by T&K TOKA Co., Ltd.), 35.3 parts by weight of methanol (manufactured by Wako Pure Chemical Industries, Ltd.), 17.6 parts by weight of ethanol (manufactured by Wako Pure Chemical Industries, Ltd.), and 17.6 parts by-weight of isopropyl alcohol (manufactured by Wako Pure Chemical Industries, Ltd.) were blended to provide a primer composition (11).

The results are shown in Table 1.

### [Comparative Example 1]

19.9 Parts by weight of resorcin (manufactured by Sumitomo Chemical Co., Ltd.), 0. 5 part by weight of 12-aminododecanoic acid (trade name: "K-37Y", manufactured by PTI Japan Corporation), 39.8 parts by weight of methanol (manufactured by Wako Pure Chemical Industries, Ltd.), 19.9 parts by weight of ethanol (manufactured by Wako Pure Chemical Industries, Ltd.), and 19.9 parts by weight of isopropyl alcohol (manufactured by Wako Pure Chemical Industries, Ltd.) were blended to provide a primer composition (C1).

The results are shown in Table 1.

### [Comparative Example 2]

23.5 Parts by weight of resorcin (manufactured by Sumitomo Chemical Co., Ltd.), 5.9 parts by weight of a dimethylalkylamine (trade name: "FARMIN DM8680", manufactured by Kao Corporation), 35. 3 parts by weight of methanol (manufactured by Wako Pure Chemical Industries, Ltd.), 17.6 parts by weight of ethanol (manufactured by Wako Pure Chemical Industries, Ltd.), and 17.6 parts by weight of isopropyl alcohol (manufactured by Wako Pure Chemical Industries, Ltd.) were blended to provide a primer composition (C2).

The results are shown in Table 1.

**[Table 1]**

| Material | Brand | Example 1 | Example 2 | Example 3 | Example 4 | Example 5 | Example 6 | Example 7 | Example 8 | Example 9 | Example 10 | Example 11 | Comparative Example 1 | Comparative Example 2 |
|---|---|---|---|---|---|---|---|---|---|---|---|---|---|---|
| Solvent | MeOH | 35.3 | 35.3 | 35.3 | 35.3 | 35.3 | 35.3 | 35.3 | 35.3 | | 35.3 | 35.3 | 39.8 | 35.3 |
| | EtOH | 17.6 | 17.6 | 17.6 | 17.6 | 17.6 | 17.6 | 17.6 | 17.6 | | 17.6 | 17.6 | 19.9 | 17.6 |
| | IPA | 17.6 | 17.6 | 17.6 | 17.6 | 17.6 | 17.6 | 17.6 | 17.6 | | 17.6 | 17.6 | 19.9 | 17.6 |
| | MEK | | | | | | | | | 70.6 | | | | |
| Hydroxyl group-containing aromatic compound | Resorcin | 23.5 | 23.5 | 23.5 | 23.5 | 23.5 | 23.5 | 17.6 | 26.5 | 23.5 | | | 19.9 | 23.5 |
| | 2,4-Dihyd roxybenzo phenone | | | | | | | | | | 23.5 | | | |
| | Catechol | | | | | | | | | | | 23.5 | | |
| Epoxy-modified polyamide resin | TXM74B3 | 5.9 | | | | | | 11.8 | 2.9 | 5.9 | 5.9 | 5.9 | | |
| Bisphenol A epoxy | 834 | | 5.9 | | | | | | | | | | | |
| Dimer acid-modified epoxy | YD172 | | | 5.9 | | | | | | | | | | |
| CTBN-modified epoxy | EPR-2000 | | | | 5.9 | | | | | | | | | |
| Phenol novolac-type epoxy | EPALLOY 8250 | | | | | 5.9 | | | | | | | | |
| Diaminodiph nylmethane-type epoxy | JER604 | | | | | | 5.9 | | | | | | | |
| 12-Aminodode canoic acid | K-37Y | | | | | | | | | | | | 0.5 | |
| Dimethylalkylamine | FARMIN DM8680 | | | | | | | | | | | | | 5.9 |
| Solid content concentration (wt%) | | 29.4 | 29.4 | 29.4 | 29.4 | 29.4 | 29.4 | 29.4 | 29.4 | 29.4 | 29.4 | 29.4 | 20.4 | 29.4 |
| Shearing adhesive strength (MPa) | N=1 | 24.5 | 22.9 | 24.3 | 25.1 | 22.4 | 22.2 | 22.6 | 26.4 | 27.0 | 20.7 | 24.1 | 21.1 | 21.3 |
| | N=2 | 25.2 | 24.2 | 24.6 | 22.1 | 24.0 | 24.5 | 21.7 | 26.1 | 24.8 | 24.1 | 23.9 | 22.0 | 20.8 |
| | AVE. | 24.8 | 23.5 | 24.4 | 23.6 | 23.2 | 23.3 | 22.1 | 26.3 | 25.9 | 22.4 | 24.0 | 21.5 | 21.0 |

### Industrial Applicability

The primer composition of the present invention is suitable as a primer between a lightweight material to be used in a transportation machine, such as a railway vehicle, an aircraft, a ship, or an automobile, and an adhesive. The composite article of the present invention contains a fiber-reinforced plastic (FRP) whose surface is at least partially subjected to a primer treatment with the primer composition of the present invention. Accordingly, the composite article can cause the fiber-reinforced plastic (FRP) and an adhesive to sufficiently conform to each other to express a sufficient adhesive strength, and hence can be suitably used in the field of a transportation machine, such as a railway vehicle, an aircraft, a ship, or an automobile.

## Claims

1. A primer composition, comprising:
an aromatic compound having a hydroxyl group; and
an epoxy.

2. The primer composition according to claim 1, wherein a content ratio "aromatic compound having a hydroxyl group/epoxy" of the aromatic compound having a hydroxyl group to the epoxy is from 30/70 to 99/1 in terms of a weight ratio.

3. The primer composition according to claim 1 or 2, further comprising a solvent.

4. the primer composition according to any one of claims 1 to 3, wherein the primer composition is used for a primer treatment of a surface of a fiber-reinforced plastic.

5. A composite article, comprising a fiber-reinforced plastic, wherein at least part of a surface of the fiber-reinforced plastic is subjected to a primer treatment with the primer composition of any one of claims 1 to 4.

6. The composite article according to claim 5, wherein the fiber-reinforced plastic has a sheet shape and the surface subjected to the primer treatment comprises one surface side of the sheet.

7. The composite article according to claim 6, wherein the surface subjected to the primer treatment has placed thereon at least one kind selected from an adhesive resin composition, an adhesive tape formed by curing the adhesive resin composition, and an adhesive tape with a base material having a base material layer and a layer formed by curing the adhesive resin composition.
